# EUROPÄISCHE PATENTSCHRIFT

(11) **EP 1 896 736 B1**
(45) Veröffentlichungstag und Bekanntmachung des Hinweises auf die Patenterteilung: **29.10.2008**
(21) Anmeldenummer: 06762284.5
(22) Anmeldetag: 29.06.2006
(51) Int. Cl.: F16B 37/04

(54) **MUTTERARTIGES ELEMENT ZUM FESTLEGEN IN EINEM INNENRAUM EINES PROFILS OD.DGL. WERKSTÜCKES**
NUT-TYPE ELEMENT TO BE FIXED IN AN INTERIOR OF A PROFILED WORKPIECE OR SIMILAR
ELEMENT DE TYPE ECROU A FIXER A L'INTERIEUR D'UN PROFILE OU AUTRE PIECE SIMILAIRE

(30) Priorität: 30.06.2005 DE 202005010434 U
(43) Veröffentlichungstag der Anmeldung: 12.03.2008
(73) Patentinhaber: Holscher, Winfried, K. W., 78234 Engen (DE)
(72) Erfinder: Holscher, Winfried, K. W., 78234 Engen (DE)
(74) Vertreter: Nüsse, Stephan
(86) Internationale Anmeldenummer: PCT/EP2006/006334
(87) Internationale Veröffentlichungsnummer: WO 2007/003347

(56) Entgegenhaltungen:
- DE-A1- 19 902 461
- DE-U1- 9 215 843
- US-A- 3 493 025
- US-A- 5 032 047

## Beschreibung

Die Erfindung betrifft ein mutterartiges Element zum Festlegen in einem Innenraum eines Profils od.dgl. Werkstückes mit einer die Breite eines Einführungsquerschnitts übersteigenden Längserstreckung, insbesondere Verbindungseinrichtung zum Anschluss eines den Innenraum aufweisenden ersten Werkstückes an ein anderes Werkstück mittels einer Schraube od.dgl. Organs, deren/dessen Schaft eine Öffnung des Werkstücks durchsetzt und in eine Ausnehmung des im Werkstückinnenraum befindlichen mutterartigen Elements aus metallischem Werkstoff einsetzbar ist.

Insbesondere bei metallischen Hohlkörpern, deren Innenraum von außen her nicht zugänglich ist, bleibt die Befestigung eines Profils od.dgl. durch eine Schraube mit Schwierigkeiten verbunden.

Zwar ist es bekannt, an hohlen Wänden von Bauwerken Bilder, Regale od.dgl. mit Schrauben dadurch festzulegen, dass man in den Hohlraum hinter einer Bohrung einen Plastikdübel einführt, der dann durch einen eingesetzten Haken, eine Schraube od.dgl. verformt und als Widerlager an die Innenfläche der Wand angelegt wird. Jedoch ist es nicht günstig, derartige Plastikdübel dann anzuwenden, wenn vor allem metallische Profile der beschriebenen Art miteinander verbunden werden sollen.

Ein Element der eingangs beschriebenen Art offenbart beispielsweise die Schrift zum DE-GM 92 15 843 des Anmelders. Dieser Nutenstein ist etwa quaderförmig ausgebildet und weist wenigstens zwei einander gegenüberliegende, in einem Winkel geneigte Flankenwände auf sowie ein Federorgan, das einends an einer der Flankenwände festliegt und die engere Oberfläche des Elementes mit seinem freien Ende übergreift; letzteres ist in entspanntem Zustand des Federorgans in Abstand zu einer Oberfläche des Nutensteins angeordnet.

Um mutterartige Elemente der eingangs genannten Art zu schaffen, die zum einen das Einbringen in einen Hohlkörper weitergehend vereinfachen sowie zum anderen günstig herstellbar sind, wird gemäß US-A-3493025 das mutterartige Element als rechtwinkelig gestreckter Körper ausgebildet, den in Längsachse etwa mittig eine Gewindebohrung durchsetzt, die an einer Oberfläche des Elements in einen ringförmigen Formrand mündet; dieser überragt jene Oberfläche.

Gemäß der vorliegenden Erfindung ist, dem kennzeichnenden Teil des Anspruchs 1 entsprechend, eine Anformung als Kerbwerkzeug ausgebildet.

Nach einem weiteren Merkmal der Erfindung erstreckt sich der ringförmige Formrand zumindest über die Breite des Elements, vorteilhafterweise kann der Außendurchmesser des Formrandes sogar etwas länger sein als die Breite des Elements und dieser Formrand die seitlichen Längskanten des Elements überragen. Auch hat es sich für die Handhabung als günstig erwiesen, einen vom Formrand gebildeten Ringrand an seiner zur Gewindebohrung weisenden Ringkante anzufasen, bevorzugt in einem Anfaswinkel von etwa 90°.

Erfindungsgemäß können dem ringförmigen Formrand zwei -- in die Oberfläche eingeformte -- teilkreisförmige Bogennuten zugeordnet sein. Zudem sind in die Oberfläche des Elements zwei zu seiner Längsachse parallele Formrinnen eingeformt, an deren jeweiligen Übergang zur Bogennut jeweils eine der erwähnten Anformungen vorgesehen ist; beide Eingriffsspalten sind an der Längsachse miteinander fluchtend angeordnet.

Jede der Anformungen soll zumindest eine Pultfläche anbieten, und die Pultflächen beider Anformungen sollen zum Formrand hin sowie zueinander abwärts geneigt sein. Diese beiden Pultflächen können an den Eingriffsspalten zwischen sich einen Winkel von etwa 60° bestimmen.

Vorteilhafterweise liegt der Pultfläche der Anformung am Formrand eine Einkerbung als Gegenfläche gegenüber, deren Oberfläche parallel zur Pultfläche verläuft und die ebenfalls jenen Eingriffsspalt begrenzt; der Abstand zwischen Pultfläche und Einkerbung soll etwa 2 mm betragen.

Die Anformung soll im axialen Schnitt dreiecksförmig sein, da der Pultfläche als Begrenzung auf der anderen Seite der Anformung eine gegenläufig geneigte Rückenfläche gegenüber liegt; beide bilden einen schneidenartigen Grad der Anformung. Beide Anformungen können als Kerbwerkzeuge in eineeinen als Einführungsquerschnitt einer Wand des Elements dienenden Durchbruch umgebende -- Profilfläche eindrückbar ausgebildet sein.

Zudem soll die Rückenseite des Elements querschnittlich teilkreisförmig gestaltet sein und zwei zu Querkanten des Elements geneigte -- aber in sich ebene -- Schrägflächen aufweisen, die bevorzugt in einem Winkel von etwa 25° zur Oberfläche des Elements verlaufen. Im übrigen kann auch letztere -- beidseits der Bogennuten -- zu den Querkanten des Elements hin jeweils in einem schmalen Winkel aufwärts geneigt sein.

Zur Handhabung des erfindungsgemäßen Elements wird ein Haltestab od. dgl. Werkzeug eingesetzt, der/das einen Gewindezapfen für die Gewindebohrung des Elements aufweist. Dieser Gewindezapfen soll Teil eines Stabgelenkes des Haltestabes und mit diesem durch einen Gelenkbolzen verbunden sein. In Abstand zum Stabgelenk wird bevorzugt ein vom Haltestab abkragendes Kragorgan -- insbesondere eine zum Haltestab koaxiale Gewindehülse -- angebracht, an das ein Zugwerkzeug angelegt werden kann; durch Druck auf dieses Kragorgan wird das erfindungsgemäße Element an eine Innenfläche des Profils herangeführt.

Vorteilhafterweise weist das Zugwerkzeug ein gabelförmiges Betätigungsende auf, das an jenes Kragorgan beidseits dse Haltestabes angelegt wird. An dieses soll -- abgewinkeltein Griffabschnitt angeformt sein, wobei bevorzugt am Übergang vom Griffabschnitt zum Betätigungsende an der dem Winkel zwischen beiden fernen Seite des Zugwerkzeuges ein Auflagewulst quer zur Längsachse des Griffabschnitts abragt, der auf die Profilwand außenseitig aufgelegt wird. Durch Druck auf den Griffabschnitt entsteht ein Druck auf jenes Kragorgan, und dies führt zur Betätigung des Haltestabes.

Insgesamt ergibt sich ein System, das in bestechender Weise die vom Erfinder gesehene Aufgabe erfüllt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine teilweise geschnittene Frontansicht eines Hohlprofils mit in diesem angeordneter Durchsteckmutter und einem seitlich hervorgehobenen zusätzlich -- etwas vergrößerten -- Einbauelement mit zugeordnetem Haltestab;
- Fig. 2:: eine gegenüber Fig. 1 vergrößerte Frontansicht der Durchsteckmutter;
- Fig. 3:: die Durchsteckmutter der Fig. 2 in Seitenansicht;
- Fig. 4:: die Durchsteckmutter der Fig. 2 in Draufsicht;
- Fig. 5:: eine firstwärtige Schrägsicht auf die Durchsteckmutter;
- Fig. 6:: eine Schrägsicht auf die Unterfläche der Durchsteckmutter;
- Fig. 7, 8:: zwei geschnittene Seitenansichten zu unterschiedlichen Betriebsstellungen eines Haltestabes mit angefügter Durchsteckmutter;
- Fig. 9 bis 11:: jeweils eine Seitenansicht des Haltestabes mit Durchsteckmutter in unterschiedlichen Positionen.

Ein stranggepresstes Hohlprofil 10 eines hier rechteckigen Querschnitts der äußeren Seitenhöhe h von beispielsweise 40 mm ist im Bereich seiner Wände 12 mit einem Durchbruch eines Durchmessers n von hier 14 mm versehen. Dessen Mittelachse A verläuft hier in geringem seitlichem Abstand zur Mittellinie M des Hohlprofilquerschnitts.

Im Innenraum 16 des Hohlprofils 10 ist eine sog. Durchsteckmutter 30 zu erkennen, die lösbar an einem Haltestab 20 festgelegt ist. Letzterer ist von rechteckigem Querschnitt und lagert mit seinem profilnahen freien Stabende in einem Rinnenraum 22 eines Stabgelenkes 24, von dessen dem Rinnenraum 22 ferner Fußfläche 25 ein axialer Gewindezapfen 26 abragt. Dieses Stabgelenk 24 ist mit dem Haltestab 20 durch einen die Flankenwände 23 des Rinnenraums 22 durchgreifenden Gelenkbolzen 28 verbunden. Andernends lagert der Haltestab 20 in axial angeordneten, ein Kragorgan bildenden Gewindehülsen 21.

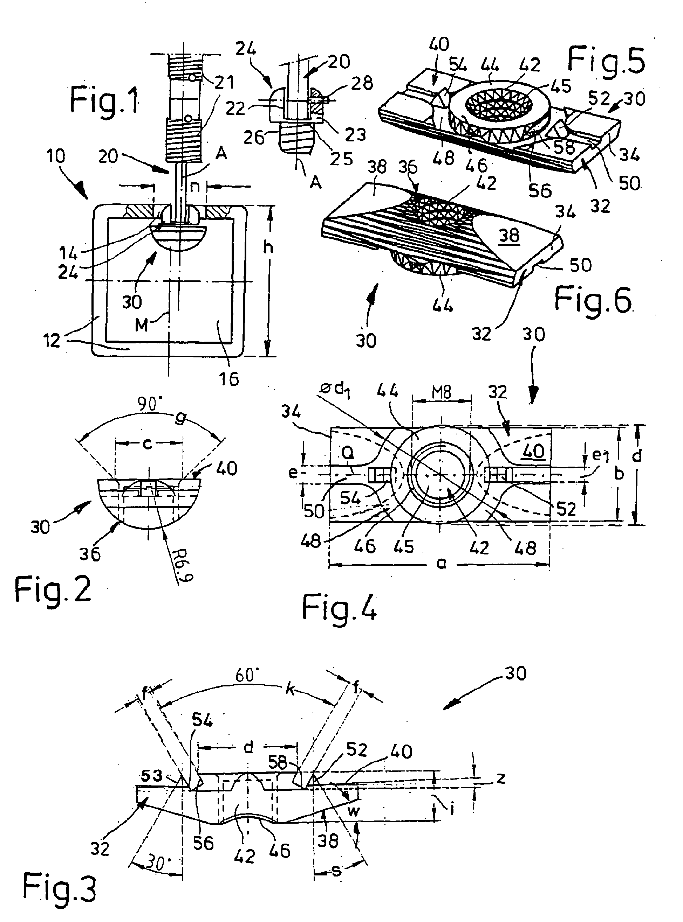

Die Durchsteckmutter 30 weist einen plattenartigen Mutternkörper 32 rechteckiger Draufsicht einer Länge a von hier 30 mm und einer Breite b von etwa 13 mm auf, dessen in Fig. 6 verdeutlichte Rücken- oder Unterseite 36 i.w. teilkreisförmigen Querschnitts ist und zwei zu seinen Querkanten 34in einem Winkel w von etwa 25° zur Oberfläche 40 der Durchsteckmutter 30 -- geneigte, in sich ebene Schrägflächen 38 enthält.

Die beiden zungenartigen Schrägflächen 38 enden nahe einer bei 42 angedeuteten zentralen Gewindebohrung, die an jener Oberfläche 40 in einem ringförmigen Formrand 44 endet, der die Oberfläche 40 überragt und in dem die Bohrungsmündung 45 von einem zu ihr hin in einem Anfaswinkel g von hier 90° angefasten Ringrand 46 des äußeren Durchmessers c von 9 mm umgeben ist. Dieser Formrand 44 des äußeren Durchmessers d von etwas mehr als 13 mm überragt den plattenartigen Mutternkörper 32 seitlich geringfügig und ist von einer teilweise in die Oberfläche 40 eingeformten teilkreisförmigen Bogennut 48 des äußeren Durchmessers d₁ von hier 18 mm umgeben. In letztere münden zwei miteinander in der Längsachse Q der Durchsteckmutter 30 verlaufende Formrinnen 50 der Oberfläche 40 einer Breite e von 2,5 mm.

Fig. 3 bis 5 ist zu entnehmen, dass am Übergang von jener Bogennut 48 zur Formrinne 50 jeweils eine Anformung 52 der Breite e₁ von 2 mm in Abstand f von etwa 2 mm zum Formrand 44 aufragt, deren zu letzterem weisende Oberfläche zu diesem hin als Pultfläche abwärts geneigt ist. Auch die Rückenfläche 53 der Anformung 52 ist zur Oberfläche 40 hin nach außen in einem Winkel s von hier 30° zur Anformungsmittellinie geneigt; diese wird von einem schneidenartigen Grad 33 der Anformung 52 bestimmt, den die dort zueinanderkommenden Pult- und Rückenflächen 54, 53 bestimmen.

Der von beiden vorderen Pultflächen 54 der Anformungen 52 bestimmte Winkel k misst hier 60°. Der Pultfläche 54 liegt in der Außenfläche des Formrandes 44 eine parallel geneigte Einkerbung 56 mit jenem Abstand f von etwa 2 mm gegenüber, wie vor allem Fig. 3 andeutet. Dieser Abstand f bestimmt die Weite eines Spaltes 58 als Eingriffsbreite für ein Einkerben der Anformungen 52. Beim Einkerben der Anformungen 52 wird das Umgebungsmaterial bis an die geneigte Gegenfläche 56 gedrückt.

Fig. 3 verdeutlicht im übrigen noch einen Winkel z von 2° zwischen dem Boden der Formrinne 50 und der -- von der Bogennut 48 etwas geneigt ansteigenden -- Oberfläche 40 der Durchsteckmutter 30, zudem deren Gesamthöhe i.

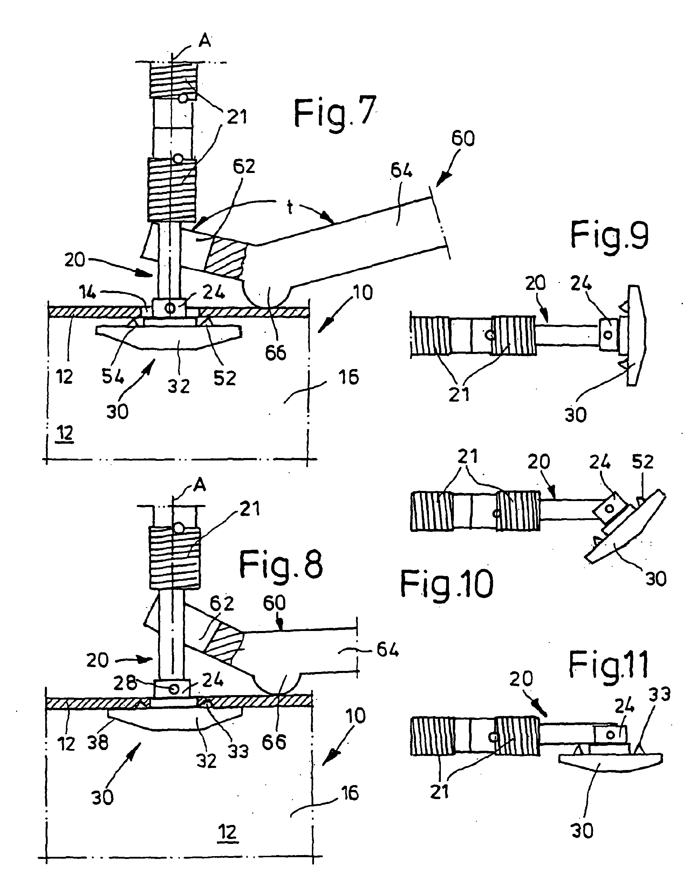

Die Durchsteckmutter 30 wird auf den Gewindezapfen 26 am Haltestab 20 gedreht (Fig. 9), an eine seiner Außenflächen herangeklappt (Fig. 10, 11) und dann durch den Durchbruch bzw. die Bohrung 14 der Hohlprofilwand 12 in den Profilinnenraum 16 eingeführt sowie in diesem wieder in die in Fig. 9 verdeutlichte Ausgangsposition zurückgestellt.

Wie Fig. 7, 8 zu entnehmen, wird dann ein Zugwerkzeug 60 mit gabelförmigem Betätigungsende 62 an den Haltestab 20 herangeführt. Die beiden Zinken des Betätigungsendes 62 sind zu einem Griffabschnitt 64 des Werkzeuges 60 in einem Winkel t von hier etwa 30° abgewinkelt; im Knickbereich ist außenseitig ein knieartiger Auflagewulst 66 vorgesehen, dank dessen das Anheben des am Betätigungsendes 62 befindlichen Haltestabes 20 vereinfacht wird. Beim Absenken des Griffabschnitts 64 wird die Durchsteckmutter 30 gegen die benachbarte Innenfläche des Hohlprofils 10 gezogen. Dabei drücken die Anformungen 52 das Umgebungsmaterial in den Spalt 58 bis an die geneigte Fläche 56; die Anformungen 52 lagern dann formschlüssig in der Hohlprofilwand 12, wie Fig. 8 deutlich werden lässt. Der Haltestab 20 wird herausgedreht, und es kann eine kraftschlüssige Verbindung hergestellt werden mit einer Schraube od.dgl. Zusatzteil. Die Durchsteckmutter 30 liegt nun verstemmt im Innenraum 16 des Hohlprofils 10 und ist gegen ein Herausfallen oder Verdrehen gesichert.

## Patentansprüche

1. Mutterartiges Element (30) zum Festlegen in einem Innenraum (16) eines Profils (10) od.dgl. Werkstückes mit einer die Breite (n) eines Einführungsquerschnitts (14) übersteigenden Längserstreckung (a), insbesondere Verbindungseinrichtung zum Anschluss eines den Innenraum aufweisenden ersten Werkstückes an ein anderes Werkstück mittels einer Schraube od.dgl. Organs, deren/dessen Schaft eine Öffnung des Werkstückes durchsetzt und in eine Ausnehmung des im Werkstückinnenraum befindlichen mutterartigen Elements aus metallischem Werkstoff einsetzbar ist, wobei das mutterartige Element (30) als rechtwinkelig gestreckter Körper ausgebildet ist, den in Längsachse (Q) etwa mittig eine Gewindebohrung (42) durchsetzt, die an einer Oberfläche (40) des Elements in einen ringförmigen Formrand (44) mündet, der jene Oberfläche überragt,
**dadurch gekennzeichnet, dass**
dem Formrand (44) in radialem Abstand (f) zumindest eine von der Oberfläche aufragende, als Kerbwerkzeug dienende Anformung (52) zugeordnet ist, die mit dem Formrand einen Eingriffsspalt (58) bildet.

2. Element nach Anspruch 1, **dadurch gekennzeichnet, dass** es als Feingussteil hergestellt ist.

3. Element nach Anspruch 1 oder 2, **dadurch gekennzeichnet, dass** der ringförmige Formrand (44) sich zumindest über die Breite (b) des Elements (30) erstreckt.

4. Element nach Anspruch 3, **dadurch gekennzeichnet, dass** der Außendurchmesser (d) des Formrandes (44) etwas länger ist als die Breite (b) des Elements (30) sowie der Formrand die seitlichen Längskanten des Elementes überragt.

5. Element nach einem der Ansprüche 1 bis 4, **dadurch gekennzeichnet, dass** ein vom Formrand (44) gebildeter Ringrand (46) an seiner zur Gewindebohrung (42) weisenden Ringkante angefast ist, bevorzugt in einem Anfaswinkel (g) von etwa 90°.

6. Element nach einem der Ansprüche 1 bis 5, **dadurch gekennzeichnet, dass** dem ringförmigen Formrand (44) zwei teilkreisförmige Bogennuten (48) zugeordnet und diese in die Oberfläche (40) eingeformt sind.

7. Element nach Anspruch 6, **dadurch gekennzeichnet, dass** in seine Oberfläche (40) zwei zur Längsachse (Q) parallele Formrinnen (50) eingeformt sind, an deren jeweiligen Übergang zur Bogennut (48) jeweils eine der Anformungen (52) vorgesehen ist, wobei beide Eingriffsspalte (58) an der Längsachse fluchtend angeordnet sind.

8. Element nach einem der Ansprüche 1 bis 7, **dadurch gekennzeichnet, dass** Pultflächen (54) beider Anformungen (52) zum Formrand (44) hin sowie zueinander abwärts geneigt sind.

9. Element nach Anspruch 8, **dadurch gekennzeichnet, dass** die beiden Pultflächen (54) an den Eingriffsspalten (58) zwischen sich einen Winkel (k) von etwa 60° bestimmen.

10. Element nach Anspruch 8 oder 9, **dadurch gekennzeichnet, dass** der Pultfläche (54) der Anformung (52) am Formrand (44) eine Einkerbung (56) als Gegenfläche gegenüberliegt, deren Oberfläche parallel zur Pultfläche verläuft.

11. Element nach Anspruch 10, **gekennzeichnet durch** einen Abstand (f) zwischen Pultfläche (54) und Einkerbung (56) von etwa 2 mm.

12. Element nach einem der Ansprüche 8 bis 11, **dadurch gekennzeichnet, dass** die Anformung (52) einerseits die den Eingriffsspalt (58) begrenzende innere Pultfläche (54) aufweist sowie anderseits eine dazu gegenläufige Pultfläche als Rückenfläche (53).

13. Element nach Anspruch 12, **gekennzeichnet durch** einen schneidenartigen Grad als Grenzlinie zwischen Pultfläche (54) und Rückenfläche (53) der Anformung (52).

14. Element nach Anspruch 1 und 12, **dadurch gekennzeichnet, dass** seine beiden Anformungen (52) als Kerbwerkzeuge in eine einen Durchbruch (14) als Einführungsquerschnitt einer Wand (12) des Elementes (10) umgebende Profilfläche eindrückbar ausgebildet sind (Fig. 8).

15. Element nach einem der Ansprüche 1 bis 14, **dadurch gekennzeichnet, dass** seine Rückenseite (36) querschnittlich teilkreisförmig gestaltet ist und zwei zu Querkanten (34) des Elements (30) geneigte, in sich ebene Schrägflächen (38) aufweist.

16. Element nach Anspruch 15, **gekennzeichnet durch** einen Winkel (w) von etwa 25° zwischen Schrägfläche (38) und Oberfläche (40) des Elements (30).

17. Element nach einem der Ansprüche 6 bis 16, **dadurch gekennzeichnet, dass** seine Oberfläche (40) beidseits der Bogennuten (48) zu Querkanten hin in einem schmalen Winkel (z) jeweils aufwärts geneigt ist (Fig. 3).

18. Element nach einem der Ansprüche 1 bis 17, **dadurch gekennzeichnet, dass** der Gewindebohrung (42) ein Gewindezapfen (26) eines Haltestabes (20) od.dgl. Werkzeuges zugeordnet ist.

19. Element nach Anspruch 18, **dadurch gekennzeichnet, dass** der Gewindezapfen (26) Teil eines Stabgelenkes (24) des Haltestabes (20) und mit diesem durch einen Gelenkbolzen (28) verbunden ist.

20. Element nach Anspruch 19, **dadurch gekennzeichnet, dass** in Abstand zum Stabgelenk (29) ein vom Haltestab (20) abkragendes Kragoran, insbesondere eine zum Haltestab koaxiale Gewindehülse (21), angeordnet ist, an das/die ein Zugwerkzeug (60) anfügbar ist.

21. Element nach Anspruch 20, **gekennzeichnet durch** ein an das Kragorgan (21) anlegbares Betätigungsende (62) des Zugwerkzeuges (60) mit einem zum Betätigungsende in einem Winkel (t) verlaufenden Griffabschnitt (64).

22. Element nach Anspruch 21, **dadurch gekennzeichnet, dass** am Übergang vom Griffabschnitt (64) zum Betätigungsende (62) an der dem Winkel (t) fernen Seite des Zugwerkzeuges (60) ein Auflagewulst quer zur Längsachse des Griffabschnitts abragt (Fig. 7, 8).

23. Element nach Anspruch 22, **dadurch gekennzeichnet, dass** das Betätigungsende (62) mit zwei etwa parallelen Zinken gabelförmig ausgebildet ist.

## Claims

1. Nut-like element (30) for fixing in an interior (16) of a profile (10) or similar workpiece having a longitudinal extension (a) exceeding the width (n) of an introduction cross-section (14), in particular connecting device for connection of a first workpiece having the interior to a further workpiece by means of a screw or similar member, the shaft of which penetrates an opening of the workpiece and can be inserted in a recess of the nut-like element of metallic material situated in the workpiece interior, wherein the nut-like element (30) is designed as a body which is elongated at right-angles, which penetrates a threaded bore (42) approximately centrally in longitudinal axis (Q), which threaded bore (42) leads into an annular shaped edge (44) at one surface (40) of the element, which shaped edge (44) projects beyond that surface, **characterised in that** a least one moulding (52) serving as notch tool and projecting up from the surface is assigned to the shaped edge (44) at radial distance (f), which moulding (52) forms an engagement gap (58) with the shaped edge.

2. Element according to claim 1, **characterised in that** it is produced as a precision-cast part.

3. Element according to claim 1 or 2, **characterised in that** the annular shaped edge (44) extends at least over the width (b) of the element (30).

4. Element according to claim 3, **characterised in that** the external diameter (d) of the shaped edge (44) is somewhat longer than the width (b) of the element (30) and the shaped edge projects beyond the lateral longitudinal edges of the element.

5. Element according to one of claims 1 to 4, **characterised in that** an annular edge (46) formed by the shaped edge (44) is chamfered at its annular rim pointing towards the threaded bore (42), preferably at a chamfering angle (g) af about 90°.

6. Element according to one of claims 1 to 5, **characterised in that** two curved grooves (48) like a graduated circle are assigned to the annular shaped edge (44) and they are moulded into the surface (40).

7. Element according to claim 6, **characterised in that** two shaped channels (50) which are parallel to the longitudinal axis (Q) are moulded into its surface (40), in each case one of the mouldings (52) being provided at the particular transition of the shaped channels (50) to the curved groove (48), wherein both engagement gaps (58) are arranged to be aligned on the longitudinal axis.

8. Element according to one of claims 1 to 7, **characterised in that** the desk surfaces (54) of both mouldings (52) are inclined towards the shaped edge (44) and downwards to one another.

9. Element according to claim 8, **characterised in that** the two desk surfaces (54) at the engagement gaps (58) between them define an angle (k) of about 60°.

10. Element according to claim 8 or 9, **characterised in that** an indentation (56) as counter-surface, the surface of which runs parallel to the desk surface, is opposite the desk surface (54) of the moulding (52) on the shaped edge (44).

11. Element according to claim 10, **characterised by** a distance (f) between desk surface (54) and indentation (56) of about 2 mm.

12. Element according to one of claims 8 to 11, **characterised in that** the moulding (52) has on the one side the inner desk surface (54) defining the engagement gap (58) and on the other side a desk surface opposite thereto as back surface (53).

13. Element according to claim 12, **characterised by** a blade-like degree as a boundary line between desk surface (54) and back surface (53) of the moulding (52).

14. Element according to claim 1 and 12, **characterised in that** its two mouldings (52) are designed as notch tools which can be pressed into a profile surface surrounding an opening (14) as introduction cross-section of a wall (12) of the element (10) (Figure 8).

15. Element according to one of claims 1 to 14, **characterised in that** its back side (36) is shaped to be like a graduated circle in cross-section and has two inclined surfaces (38), which are flat per se, and inclined to transverse rims (34) of the element (30).

16. Element according to claim 15, **characterised by** an angle (w) of about 25° between inclined surface (38) and surface (40) of the element (30).

17. Element according to one of claims 6 to 16, **characterised in that** its surface (40) is inclined in each case upwards on both sides of the curved grooves (48) towards transverse rims at a narrow angle (z) (Figure 3).

18. Element according to one of claims 1 to 17, **characterised in that** a threaded stem (26) of a holding rod (20) or similar tool is assigned to the threaded bore (42).

19. Element according to claim 18, **characterised in that** the threaded stem (26) is part of a rod hinge (24) of the holding rod (20) and is connected to the latter by a hinge bolt (28).

20. Element according to claim 19, **characterised in that** a collar member projecting from the holding rod (20), in particular a threaded sleeve (21) which is coaxial to the holding rod, and to which a traction tool (60) can be added, is arranged at a distance from the rod hinge (29).

21. Element according to claim 20, **characterised by** an actuating end (62) of the traction tool (60) which can be applied to the collar member (21) and having a handle section (64) running towards the actuating end at an angle (t).

22. Element according to claim 21, **characterised in that** a supporting bead projects transversely to the longitudinal axis of the handle section at the transition from the handle section (64) to the actuating end (62) on the side of the traction tool (60) remote from the angle (t) (Figures 7, 8).

23. Element according to claim 22, **characterised in that** the actuating end (62) is designed to be fork-shaped with two approximately parallel prongs.

## Revendications

1. Elément (30) de type écrou, à fixer dans un espace intérieur (16) d'un profilé (10) ou d'une pièce d'oeuvre analogue, avec une étendue longitudinale (a) supérieure à la largeur (n) d'une section transversale d'introduction (14), en particulier dispositif de liaison pour le raccordement d'une première pièce d'oeuvre, présentant l'espace intérieur, à une autre pièce d'oeuvre, au moyen d'une vis ou d'un organe analogue, dont la tige traverse une ouverture de la pièce d'oeuvre, et est susceptible d'être insérée dans un évidement de l'élément de type écrou, se trouvant dans l'espace intérieur de pièce d'oeuvre, réalisé en un matériau métallique, l'élément (30) de type écrou étant réalisé sous forme de corps allongé à angles droits, que traverse à peu près centralement dans l'axe longitudinal (Q) un trou taraudé (42), débouchant, en une surface (40) de l'élément, en un bord de forme (44) en forme d'anneau, qui dépasse de cette surface,
**caractérisé en ce que,**
au bord de forme (44), est associé, à une distance (f) radiale, au moins un ergot (52), dépassant de la surface, servant d'outil d'entaillage, formant avec le bord de forme un intervalle d'engagement (58).

2. Elément selon la revendication 1, **caractérisé en ce qu'**il est fabriqué sous forme de pièce de moulage de précision.

3. Elément selon la revendication 1 ou 2, **caractérisé en ce que** le bord de forme (44) en forme d'anneau s'étend au moins sur la largeur (b) de l'élément (30).

4. Elément selon la revendication 3, **caractérisé en ce que** le diamètre extérieur (d) du bord de forme (44) est un peu plus long que la largeur (b) de l'élément (30), et le bord de forme dépasse des arêtes longitudinales de l'élément.

5. Elément selon l'une des revendications 1 à 4, **caractérisé en ce qu'**un bord annulaire (46), formé par le bord de forme (44), est biseauté sur son arête annulaire tournée vers le trou taraudé, de préférence selon un angle de biseautage (g) d'environ 90°.

6. Elément selon l'une des revendications 1 à 5, **caractérisé en ce qu'**au bord de forme (44) en forme d'anneau sont associés deux rainures arquées (48) en forme de cercle partiel et celles-ci sont formées dans la surface (40).

7. Elément selon la revendication 6, **caractérisé en ce que** deux goulottes de forme (50), parallèles à l'axe longitudinal (Q), sont formées dans sa surface (40), sur la transition respective, par rapport à la rainure arquée (48), au niveau desquelles est chaque fois prévue l'un des ergots (52), les deux intervalles d'engagement (58) étant prévus en alignement sur l'axe longitudinal.

8. Elément selon l'une des revendications 1 à 7, **caractérisé en ce que** des faces en console (54) des deux ergots (52) sont inclinées vers le bord de forme (44), ainsi qu'inclinés vers le bas l'une par rapport à l'autre.

9. Elément selon la revendication 8, **caractérisé en ce que** les deux faces en console (54), au niveau des intervalles d'engagement (58), déterminent entre elles un angle (k) d'à peu près 60°.

10. Elément selon la revendication 8 ou 9, **caractérisé en ce qu'en** regard de la face en console (54) de l'ergot (52), est disposée, au niveau du bord de forme (44), une entaille (56) faisant office de face conjuguée, dont la surface s'étend parallèlement à la face en console.

11. Elément selon la revendication 10, **caractérisé par** un espacement (f) d'environ 2 mm entre la face en console (54) et l'entaille (56).

12. Elément selon l'une des revendications 8 à 12, **caractérisé en ce que** l'ergot (52) présente, d'une part, la face en console intérieure (54), délimitant l'intervalle d'engagement (58), ainsi que, d'autre part, une face en console s'étendant en sens inverse de celle-ci, à titre de face dorsale (53).

13. Elément selon la revendication 12, **caractérisé par** un gradin, du genre d'un tranchant, faisant office de ligne de délimitation entre face en console (54) et face dorsale (53) de l'ergot (52).

14. Elément selon les revendications 1 et 12, **caractérisé en ce que** ses deux ergots (52) sont réalisés sous forme d'outils d'entaillage, en étant susceptibles d'être enfoncés dans une face profilée, entourant un passage (14), faisant office de section transversale d'insertion d'une paroi (12) de l'élément (10) (Fig. 8).

15. Elément selon l'une des revendications 1 à 14, **caractérisé en ce que** sa face dorsale (36) est conformé avec une section transversale en forme de cercle partiel et présente deux faces obliques (38) planes en soi, inclinées vers des arêtes transversales (34) de l'élément (30).

16. Elément selon la revendication 15, **caractérisé par** un angle (w) d'environ 25° entre une face oblique (38) et une surface (40) de l'élément (30).

17. Elément selon l'une des revendications 6 à 16, **caractérisé en ce que** sa surface (40) est inclinée vers le haut, des deux côtés des rainures arquées (48), vers des arêtes transversales, chaque fois de la valeur d'un petit angle (z).

18. Elément selon l'une des revendications 1 à 17, **caractérisé en ce qu'au** trou taraudé (42) est associé un tourillon fileté (26) d'une barre de maintien (20) ou analogue.

19. Elément selon la revendication 18, **caractérisé en ce** le tourillon fileté (26) fait partie d'une articulation de barre (24) de la barre de maintien (20) et est relié à celle-ci par un boulon d'articulation (28).

20. Elément selon la revendication 19, **caractérisé en ce qu'**un organe en porte-à-faux, en particulier une douille filetée (21) coaxiale à la barre de maintien, faisant saillie de la barre de maintien (20), est disposé à distance de l'articulation de barre (24), organe ou douille auquel, ou à laquelle, un outil de traction peut être raccordé.

21. Elément selon la revendication 20, **caractérisé par** une extrémité d'actionnement (62), susceptible d'être appliquée sur l'organe en porte-à-faux (21), de l'outil de traction (60), comprenant un tronçon formant poignée (64), s'étendant sous un angle (t) par rapport à l'extrémité d'actionnement.

22. Elément selon la revendication 21, **caractérisé en ce qu'**un bourrelet d'application fait saillie, transversalement à l'axe longitudinal du tronçon formant poignée, à la transition entre le tronçon formant poignée (64) et l'extrémité d'actionnement (62), sur le côté, éloigné de l'angle (t), de l'outil de traction (60) (Fig. 7,8).

23. Elément selon la revendication 22, **caractérisé en ce que** l'extrémité d'actionnement (62) est réalisée fourchue, avec deux dents à peu près parallèles.
